(19) Europäisches Patentamt
European Patent Office
Office européen des brevets

(11) **EP 1 377 448 B1**

(12) **EUROPEAN PATENT SPECIFICATION**

(45) Date of publication and mention
of the grant of the patent:
**07.04.2010 Bulletin 2010/14**

(21) Application number: **01998444.2**

(22) Date of filing: **07.11.2001**

(51) Int Cl.:
***B32B 27/32*** *(2006.01)*          ***B65D 65/40*** *(2006.01)*

(86) International application number:
**PCT/EP2001/012879**

(87) International publication number:
**WO 2002/043956 (06.06.2002 Gazette 2002/23)**

(54) **FOOD PACKAGING LAMINATES**

NAHRUNGSMITTELVERPACKUNGSLAMINATE

STRATIFIES D'EMBALLAGE D'ALIMENTS

(84) Designated Contracting States:
**AT BE CH CY DE DK ES FI FR GB GR IE IT LI LU
MC NL PT SE TR**
Designated Extension States:
**LT LV MK RO SI**

(30) Priority: **29.11.2000 US 253903 P**

(43) Date of publication of application:
**07.01.2004 Bulletin 2004/02**

(73) Proprietor: **H.B. Fuller Company
St. Paul, Minnesota 55164-0683 (US)**

(72) Inventors:
• **JANSSEN, Annegret
21337 Lüneburg (DE)**
• **ZENKER, Wolfgang
21365 Adendorf (DE)**

(74) Representative: **Maiwald Patentanwalts GmbH
Elisenhof
Elisenstrasse 3
80335 München (DE)**

(56) References cited:
**WO-A-95/10577     WO-A-99/28048
US-A- 5 523 146**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Background of the Invention**

The invention generally relates to the field of flexible packaging. Specifically, this invention relates to an article comprising a packaged food, drink, medicine, or baby toy, and a flexible food packaging laminate, the use of the laminate in the packaging of food, drinks, medicine and toys, methods of producing such articles, and methods of packaging articles.

It is well known to package food in wraps, bags, pouches etc. made of laminates. Preferred materials for food packaging often consist of a first substrate, such as a film, which is generally thin and transparent, but can be printable, and a second substrate which can be another, (often thicker) film, a metal foil, a metalized film etc.

Whereas in the past, such film-to-film and film-to-foil laminations were often produced using volatile organic solvent-based laminating adhesives, environmental and regulatory restrictions have in the more recent past caused the industry to use waterborne adhesives, especially polyurethane dispersions and acrylic emulsions.

Examples of polyurethane dispersions are disclosed in U.S. Patent Nos. 5,494,960, 5,532,058, 5,861,410, 5,907,012 and 5,834,554. U.S. Patent Nos. 5,907,012 are specially suitable for indirect food contact and 5,834,554 for direct food contact packaging.

Recently, the laminating industry has begun to investigate into solvent-free two-component reactive adhesives. Although some of these are applied at elevated temperatures, these are not hot melt adhesives.

Also the food industry has begun to use similar laminates, as food packaging materials. Such laminates are produces using reactive, generally polyurethane-based laminating adhesives.

However, film-to-film and film-to-foil laminates using solvent-free reactive laminating adhesives, even including two-component polyurethane laminating adhesives, may lead to problems specifically in food. In some cases, solvent-free reactive laminating adhesives may retain relatively high levels of monomer, unless they are very carefully cured. Such careful curing requires time and energy expenditure. Whereas in many applications of laminated materials, such monomer contamination does not present a problem, this is not true in the food industry, since the monomers may migrate into the food, which is not acceptable.

specifically, the use of reactive polyurethane adhesives has in some cases been found to lead to contamination of the packaged food with unreacted isocyanates and carcinogenic aromatic amines (probably formed by reaction of adhesive components with moisture from the food).

Thus, food packaging materials may release volatile and/or migratable contaminations which result from the adhesives used in manufacturing such materials.

This problem is, as far as the food industry is concerned, acerbated by the need for just-in-time production and delivery, such restraints actually promoting the use of not fully cured laminates.

Food as mentioned herein includes any item, whether edible or not, that are intended to be brought into contact with the body of a mammal, especially put into people's mouth, such as food items, drinks, medicine and baby toys. Mammals in this context include humans. Contact with the body means the possibility of undesired contamination of the body by volatiles and/or migratables as defined above.

EP 0 611 146 relates to a laminate for flexible packaging and a process for preparing the same, wherein a laminate for flexible packaging is obtained by joining a plurality of flexible blanks via layers of an adhesive agent, and wherein the layers of said adhesive agent are layers of an isocyanate-terminated polyurethane type hot-melt resin that is crosslinked with moisture, the residual amount of an organic solvent in said laminate is 10 $\mu$g/m$^2$ or smaller per a unit inner surface, the peeling strength at 25°C is 250 g/15 mm of width or greater, and a peeling strength retentivity at 80°C is 30% or greater of the peeling strength at 25°C.

EP 0 508 489 describes a packaging material for photosensitive materials having particular coextruded multilayers and a flexible sheet. According to EP 0 508 489, the packaging material is said to be excellent in no curling, in physical strength particularly tear strength or in tearability by hand. These packaging materials are said to equip various properties necessary for packaging photosensitive materials and are said to be excellent in bag-making ability for automatic bag-making machines.

**Summary of the Invention**

The present inventors have invented a laminate that overcomes these problems in the prior art.

The present invention specifically relates to an article comprising a packaged food, drink, medicine, or baby toy, comprising:

- a package comprising a flexible food packaging laminate comprising a first substrate having a pre-formed non-reactive hot melt laminating adhesive on at least one surface, said adhesive comprising thermoplastic polymer selected from the group consisting of copolymers of olefins and (meth-) acrylic acid, copolymers of olefins and (meth-)acrylic acid derivatives, copolymers of olefin and (meth-)acrylic acid esters, copolymers of olefins and vinylic compounds, poly-$\alpha$-olefins, polyesters, polyamides, thermoplastic synthetic rubber, metallocene-catalysed polymers, ionomers and mixtures of two or more of these thermoplastic polymers; and tackifying resin and being free from migratable contaminants, a second substrate laminated onto said adhesive bearing surface of said first substrate, said laminate being free from aromatic amines, monomeric isocyanates, oligomeric isocyanates, volatile organic contaminants, and migratable organic contaminants;

- and a food, drink, medicine, or baby toy.

The invention further relates to the use of a flexible laminate material according to claim 1 comprising a polymeric film material laminated onto a substrate by means of a hot melt laminating adhesive as a packaging material to reduce contamination of packaged foods, drinks, medicine, or baby toys by a contaminant selected from the group consisting of isocyanates, aromatic amines and mixtures thereof.

The invention also relates to a method of making the article, said method comprising:

1) forming a laminate for food packaging, said forming comprising:

a) positioning a slot nozzle at least 0.5 mm spaced away from a first substrate and advancing said first substrate along a path;
b) applying a non-reactive hot melt adhesive to a surface of said first substrate from said slot nozzle, said non-reactive hot melt adhesive comprising thermoplastic polymer selected from the group consisting of copolymers of olefins and (meth-) acrylic acid, copolymers of olefins and (meth-)acrylic acid derivatives, copolymers of olefin and (meth-)acrylic acid esters, copolymers of olefins and vinylic compounds, poly-$\alpha$-olefins, polyesters, polyamides, thermoplastic synthetic rubber, metallocene-catalysed polymers, ionomers and mixtures of two or more of these thermoplastic polymers; and tackifying resin and being free from migratable contaminants, and
c) mating a second substrate with the adhesive bearing surface of said first substrate to form a laminate; or

1) forming a laminate for food packaging, said forming comprising

a) positioning a slot nozzle at least 0.5 mm spaced away from a transfer device;
b) applying a non-reactive hot melt adhesive to a surface of said transfer device from said slot nozzle, said non-reactive hot melt adhesive comprising thermoplastic polymer and tackifying resin and being free from migratable contaminants;
c) transferring said adhesive from said transfer device to a surface of a first substrate, and
d) mating a second substrate with the adhesive bearing surface of said first substrate to form a laminate,

said food packaging laminate being free from aromatic amines, monomeric isocyanates, oligomeric isocyanates, volatile organic contaminants, and migratable organic contaminants, and
2) packaging a food, drink, medicine, or baby toy with said food packaging laminate.

The invention further relates to the use of a flexible laminate, comprising a first substrate having a pre-formed non-reactive hot melt laminating adhesive on at least one surface, said adhesive comprising thermoplastic polymer selected from the group consisting of copolymers of olefins and (meth-) acrylic acid, copolymers of olefins and (meth-) acrylic acid derivatives, copolymers of olefin and (meth-)acrylic acid esters, copolymers of olefins and vinylic compounds, poly-$\alpha$-olefins, polyesters, polyamides, thermoplastic synthetic rubber, metallocene-catalysed polymers, ionomers and mixtures of two or more of these thermoplastic polymers; and tackifying resin and being free from migratable contaminants, a second substrate laminated on said adhesive bearing surface of said first substrate, said laminate being free from aromatic amines, monomeric isocyanates, oligomeric isocyanates, volatile organic contaminants, and migratable organic contaminants for packaging food, drinks, medicine, or baby toys.

The description specifically describes a laminate for use in food packing. The laminate can be based on a laminate of a (conventional) film material and a second (conventional) substrate, using a hot melt (solvent-free) laminating adhesive, which is substantially free from volatile and/or migratable contaminants, especially monomeric or oligomeric isocyanates and aromatic amines.

Another aspect of the present description is to identify the use of such flexible laminating materials in food packaging and a corresponding method of packaging food items. The laminate can be a film-to-film and film-to-foil laminate, suitable for typical food packaging uses, using solvent-free non-reactive hot melt laminating adhesives. Such laminates are substantially free from volatile contaminants, especially migratable isocyanates and aromatic amines. They can be produced with the properties necessary for food packaging uses, if the laminating adhesive is applied as a pre-formed film to the first substrate, prior to laminating to a second substrate.

Lamination can be done either in-line or off-line. For off-line laminating, a substrate is preferably pre-coated with a hot melt adhesive, and this pre-coated film is later laminated to a second substrate by heat sealing. In-line lamination of the two films can be done directly in the nip, or in a second nip (the laminating station) using a release-roller in the first nip to squeeze out any entrapped air between the first film and the extruded ("pre-formed") adhesive film. Entrapped air can also be squeezed out using this same technique for off-line lamination.

Such pre-formed adhesive films can be generated using non-contact coating methods. Thus, film-on-film laminates using solvent-free hot melt adhesives can be produced, by non-contact coating of the adhesive onto one of the films and then contacting and, in case, nipping the two films. A corresponding disclosure can be found in Applicant's earlier application PCT/EP98/01588 especially where the coating method, the selection of film and other substrate materials and the selection of adhesives is concerned.

The present invention further relates to a method of forming a laminate for food packaging comprising:

> a) positioning a slot nozzle at least 0.5 mm spaced away from a first substrate and advancing said first substrate along a path;
>
> b) applying a non-reactive hot melt adhesive to a surface of said first substrate from said slot nozzle; and
>
> c) mating a second substrate with the adhesive bearing surface of said first substrate to form a laminate that has reduced contamination of packaged goods by volatile and/or migratable organic materials.

Preferably, the adhesive is applied directly to said first substrate surface, i.e. it does not contact anything solid between the point in time when the adhesive leaves the slot nozzle and the point in time when the adhesive first contacts the substrate.

However, in some applications, it may be advantageous that the adhesive is applied from the slot nozzle to a transfer device such as a roller or transfer tape, and is then coated onto the substrate surface from said roller or tape. Also in such methods, the slot nozzle will preferably not be in contact with the transfer device. In such cases, the nozzle will be positioned spaced at least 0.5 mm away from the surface of said transfer device, and may of course be much more distanced from the substrate.

Lastly, the description includes methods of packaging articles which are intended to come into contact with mammalian bodies, especially humans, and among these specially with items for ingestion and mouth contact, such as food, drink, medicine and toy items such as baby toys, and with correspondingly packaged such articles.

## Brief Description of the Drawings

Figure 1A shows the basic structure of a coating and laminating equipment suitable for practicing the present invention.

Figures 1B and 1C show other structures of a coating and lamination equipment also suitable for practicing the present invention.

Figures 2 through 10 show preferred equipment for practicing the present invention.

## Detailed Description of the Invention

The flexible food packaging items described in the specification will often be in the form of a bag or pouch, which can be sealed , such as heat-sealed, as is customary in the food packaging industry. Alternatively, the flexible food packaging items can be in the form of a web or sheet material for the production of such bags or pouches, or for wrapping purposes. It is preferred that the pre-forming of the hot melt laminating adhesive film, e.g. by the non-contact coating method as already mentioned, occurs during the in-line production of the laminate material. To achieve this, the devices as e.g. shown in already mentioned PCT/EP98/01588 can be used. The amount of hot melt laminating adhesive used corresponds to the typical range of area weights in this type of laminate, but will generally be at the lower end thereof, since the non-contact coating method employed in this invention permits the use of very low area weights without causing problems such as streaking.

Coating weights of no more than 20 $g/m^2$, preferably no more than 10 $g/m^2$, more preferable from 2 to 6 $g/m^2$, are realized

It is surprising that this non-contact coating method is particularly suitable for food packaging, Thus the food packaging laminates of the present invention generally use the typical film substrates known in the art. Thus, the film material will often be a polyolefin such as LDPE, PE or PP, or a polyester such as PET; the second substrate will often be another, often thicker polyolefin such as PE or PP, or a PET or nylon film. Metalized films such as metalized PP or PET can be used. The films used in the invention are generally heat-sealable. Corresponding film and substrate materials are e.g. disclosed by B.S. Glassbrenner, "Third Generation Solventless Laminating Adhesives for the Flexible Packaging Market", TAPPO 1996 Polymers, Laminations and Coatings Conference, the contents of which are hereby incorporated by reference.

Film-to paper laminates for the graphical industry using hot melt laminating adhesives are e.g. described in U.S. Patent 5,958,178.

It can be specifically advantageous to use biodegradable materials, especially biodegradable hot melt adhesives and films, in the context of this invention. Some biodegradable materials are e.g. disclosed in applicant's PCT/US94/09666.

These and more types of hot melt adhesives can be used with this coating method to produce reduced monomers or volatile organics without drying or solvent evaporating steps, and can achieve low levels of adhesive coating. This is especially important for food packaging. While reactive solvent or water-based emulsions and solvent-less reactive adhesives have to be carefully prepared to achieve adhesives with low levels of monomers, oligomers as well as other impurities, it is easier to achieve such low levels with thermoplastic materials suitable for food packaging, especially when low amounts are used.

The preferred adhesives in the context of the present invention comprises those disclosed in PCT/EP98/01588. The non-reactive hot melt adhesives are based on copolymers of olefins and (meth-)acrylic acid; copolymers of olefins and (meth-)acrylic acid derivatives; copolymers of olefin and (meth-)acrylic acid esters; copolymers of olefins and vinylic compounds; poly-$\alpha$-olefins, especially atactic poly-$\alpha$-olefins (APAOs); polyesters; polyamides; thermoplastic synthetic rubber; metallocen-catalysed polymers, especially based on ethylenes and/or propylene; ionomers and especially copolymers; and mixtures of two or more of these thermoplastic polymers.

Specifically, useful ones include EMA, EnBA, EVA, or ethylene copolymers, blended with aliphatic hydrocarbon resins, aromatic hydrocarbon resins, wood or colophonium resins and polyethylene or polyethylene wax, or thermoplastic materials such as polyolefins, especially polyethylene, polypropylene, amorphous polyolefins such as Vestoplast 703.RTM. (Hüls) and the like. One especially useful hot melt adhesives includes Advantra®, where low monomer content, narrow molecular weight distribution, and low viscosity for easier coating without the need for additives and diluents are possible.

Specific advantages can be obtained where the thermoplastic polymer has two or even three different EnBA components, which differ in the amount of ester, in the melt flow index, or in the melting point or softening temperature range. It is specifically preferred that the thermoplastic polymer comprises at least two EnBAs with differ by a factor of at least 4 and up to 10 in their melt flow index (MFI), expressed, as usual, in grams per 10 minutes.

Uncompounded thermoplastic materials such as polyolefins, especially polyethylene, polypropylene, amorphous polyolefins such as Vestoplast 70® (Hüls), polyesters, polyamides and the like, may also be suitable as laminating adhesives of the present invention.

A preferred type of polyolefin, typically described as "metallocene polyolefins", is produced with a single-site catalyst resulting in a homogenous distribution of comonomer branching, and a narrow molecular weight distribution, i.e., a molecular weight distribution, $M_w/M_n$, less than or equal to 3, preferably less than or equal to 2.5. The connotation "metallocene" is not meant in any way to be limiting regarding the specific catalyst used in the process of manufacturing the copolymer, but merely an abbreviated description of the homogenously branched linear or substantially linear polymer structures themselves.

By the term homogenous, it is meant that any comonomer is randomly distributed within a given interpolymer molecule and substantially all of the interpolymer molecules have the same ethylene/comonomer ratio within that interpolymer. The DSC melting peak of homogenous linear and substantially linear ethylene polymers will broaden as the density decreases and/or as the number average molecular weight decreases. However, unlike heterogeneous polymers, when a homogenous polymer has a melting peak greater than 115° C (such as is the case of polymers having a density greater than 0.940 g/cm$^3$), such polymers do not additionally have a distinct lower temperature melting peak.

In addition or in the alternative, the homogeneity of the polymers is typically described by the SCBDI (Short Chain Branch Distribution Index) or CDBI (Composition Distribution Branch Index) and is defined as the weight percent of the polymer molecules having a comonomer content within 50 percent of the median total molar comonomer content. The SCBDI of a polymer is readily calculated from data obtained from techniques known in the art, such as, for example, temperature rising elution fractionation (abbreviated herein as "TREF") as described, for example, in Wild et al., Journal of Polymer Science, Poly. Phys. Ed., Vol. 20, p. 441 (1982), in U.S. Patent Nos. 4,798,081 (Hazlitt et al.), or in 5,089321 (Chum et al.). The SCBDI or CDBI for the homogenous linear and for the substantially linear ethylene/.$\alpha$-olefin polymers used in the present invention is preferably greater than 50 percent.

Heterogeneous polymers are ethylene/$\alpha$-olefin interpolymers characterized as having a linear backbone and a DSC melting curve having a distinct melting peak greater than 115° C attributable to a high density fraction. Heterogeneous interpolymers will typically have an $M_w/M_n$ greater than 3 (when the density of the interpolymer is less than 0.960 g/cc) and will typically have a CDBI less than or equal to 50, indicating that such interpolymers are a mixture of molecules having differing comonomer contents and differing amounts of short chain branching.

The homogenous polyethylenes useful in this invention fall into two broad categories, the linear homogenous polyethylenes and the substantially linear polyethylenes. Both are known.

Homogenous linear ethylene polymers have long been commercially available. As exemplified in U.S. Patent No. 3,645,992 to Elston, homogenous linear ethylene polymers can be prepared in conventional polymerisation processes using Ziegler-type catalysts such as, for example, zirconium and vanadium catalyst systems. U.S. Patent Nos. 4,937,299 to Ewen et al. and 5,218,071 to Tsutsui et al. disclose the use of metallocene catalysts, such as catalyst systems based on hafnium, for the preparation of homogenous linear ethylene polymers. Homogenous linear ethylene polymers are typically characterized as having a molecular weight distribution $M_w/M_n$, of about 2. commercially available examples of homogenous linear ethylene polymers include those sold by Mitsui Petrochemical Industries as Tafmer™ resins and by Exxon Chemical Company as Exact™ resins.

The substantially linear ethylene polymers (SLEPs) are homogenous polymers having long chain branching. They are disclosed in U.S. Patent Nos. 5, 272,236 and 5,272,272. SLEPs are available from The Dow Chemical Company as polymers made by the Insite™. Process and Catalyst Technology, such as Affinity™ polyolefin plastomers (POPs). SLEPs can be prepared via the solution, slurry, or gas phase, preferably solution phase, polymerisation of ethylene and one or more optional $\alpha$-olefin comonomers in the presence of a constrained geometry catalyst, such as is disclosed in European Patent Application 416,815-A. The constrained geometry catalysts are described in more detail later.

The term "substantially linear" means that, in addition to the short chain branches attributable to homogenous comonomer incorporation, the ethylene polymer is further characterized as having long chain branches in that the polymer backbone is substituted with an average of 0.01 to 3 long chain branches/1000 carbons. Preferred substantially linear polymers for use in the invention are substituted with from 0.01 long chain branch/1000 carbons to 1 long chain branch/ 1000 carbons, and more preferably from 0.05 long chain branch/1000 carbons to 1 long chain branch/1000 carbons. In contrast to the term "substantially linear", the term "linear" means that the polymer lacks measurable or demonstrable long chain branches, i.e., the polymer is substituted with an average of less than 0.01 long chain branch/1000 carbons.

For ethylene/$\alpha$-olefin interpolymers, the long chain branch is longer than the short chain branch that results from the incorporation of the $\alpha$-olefin(s) into the polymer backbone. Each long chain branch has the same comonomer distribution as the polymer backbone and can be as long as the polymer backbone to which it is attached.

The presence of long chain branching can be determined in ethylene polymers by using $C^{13}$ nuclear magnetic resonance (NMR) spectroscopy and is quantified using the method described by Randall (Rev. Macromol. Chem. Phys., C.29, V.2&3, p. 285-297).

As a practical matter, current $C^{13}$ nuclear magnetic resonance spectroscopy cannot determine the length of a long chain branch in excess of six carbon atoms. However, there are other known techniques useful for determining the presence of long chain branches in ethylene polymers, including ethylene/1-octene interpolymers. Two such methods are gel permeation chromatography coupled with a low angle laser light scattering detector (GPC-LALLS) and gel permeation chromatography coupled with a differential viscometer detector (GPC-DV). The use of these techniques for long chain branch detection and the underlying theories have been well documented in the literature. See, e.g., Zimm, G.H. and Stockmayer, W.H., J. Chem. Phys., 17, 1301 (1949) and Rudin, A., Modem Methods of Polymer Characterization, John Wiley & Sons, New York (1991) pp. 103-112. Further, and in particular, A. Willem de Groot and P. Steve Chum, both of The Dow Chemical Company, at the Oct. 4, 1994, conference of the Federation of Analytical Chemistry and Spectroscopy Society (FACSS) in St. Louis, Mo., presented data demonstrating that GPC-DV is a useful technique for quantifying the presence of long chain branches in substantially linear ethylene polymers.

The empirical effect of the presence of long chain branching in the substantial linear ethylene/$\alpha$-olefin interpolymers used in the invention is manifested as enhanced rheological properties which are quantified and expressed herein in terms of gas extrusion rheometry (GER) results and/or a melt flow $I_{10}/I_2$, which may be varied independently of the $M_w/M_n$.

Substantially linear ethylene polymers are further characterized as having:

(a) a melt flow ratio, $I_{10}/I_2 \geq 5.63$,

(b) a molecular weight distribution, $M_w/M_n$ as determined by gel permeation chromatography and defined by equation:

$$(M_w/M_n) \leq (I_{10}/I_2)-4.63,$$

(c) a critical shear stress at the onset of gross melt fracture, as determined by gas extrusion rheometry, of greater

than $4 \times 10^6$ dynes/cm² or a gas extrusion rheology such that the critical shear rate at onset of surface melt fracture for the substantially linear ethylene polymer is at least 50 percent greater than the critical shear rate at the onset of surface melt fracture for a linear ethylene polymer, wherein the substantially linear ethylene polymer and the linear ethylene polymer comprise the same comonomer or comonomers, the linear ethylene polymer has an $I_2$, $M_w/M_n$ and density within ten percent of substantially linear ethylene polymer and wherein the respective critical shear rates of the SLEP and the linear ethylene polymer are measured at the same melt temperature using a gas extrusion rheometer, and

(d) a single differential scanning calorimetry, DSC, melting peak between -30 and 150° C

An apparent shear stress versus apparent shear rate plot is used to identify the melt fracture phenomena and quantify the critical shear rate and critical shear stress of ethylene polymers.

According to Ramamurthy in the Journal of Rheology, 30 (2), 337-357, 1986, above a certain critical flow rate, the observed extrudate irregularities may be broadly classified into two main types: surface melt fracture and gross melt fracture.

Surface melt fracture occurs under apparently steady flow conditions and ranges in detail from loss of specular film gloss to the more severe form of "sharkskin". Herein, as determined using the above-described GER, the onset of surface melt fracture (OSMF) is characterized at the beginning of losing extrudate gloss at which the surface roughness of the extrudate can only be detected by 40x magnification. The critical shear rate at the onset of surface melt fracture for the substantially linear ethylene polymers is at leas 50 percent greater than the critical shear rate at the onset of surface melt fracture of a linear ethylene polymer having essentially the same $I_2$ and $M_w/M_n$.

Gross melt fracture occurs at unsteady extrusion flow conditions and ranges in detail from regular (alternating rough and smooth, helical, etc.) to random distortions. For commercial acceptability to maximize the performance properties of films, coatings and moldings, surface defects should be minimal, if not absent. The critical shear stress at the onset of gross melt fracture for the substantially linear ethylene polymers, especially those having a density >0.910 g/cc, used in the invention is greater than $4 \times 10^6$ dynes/cm². The critical shear rate at the onset of surface melt fracture (OSMD) and the onset of gross melt fracture (OGMF) will be used herein based on the changes of surface roughness and configurations of the extrudates extruded by a GER. Preferably, the substantially linear ethylene polymer will be characterized by its critical shear rate when used as the first ethylene polymer of the invention and by its critical shear stress when used as the second ethylene polymer of the invention.

The adhesive can also comprise up to 100 % of at least one EMA, EnBA or homogenous linear polymer. Preferably, the thermoplastic polymer component comprises at least two, preferably three, different EnBA components, wherein one EnBA component has a melt flow index which is at least four times and up to 10 times higher than the melt flow index of at least one other EnBA component, said melt flow index being in units of gram per 10 minutes. If the thermoplastic polymer comprises more than one EnBA component, said EnBA components differing in the ester content, in the melt flow index and/or the melting point or softening point.

Tackifying resins can be used and are selected from aliphatic and aromatic hydrocarbon resins, especially hydrogenated aliphatic hydrocarbon resins and α-methyl styrene resins, colophonium resins and colophonium ester resins, especially hydrogenated such colophonium and colophonium ester resins. The preferred tackifying resin is hydrogenated aliphatic hydrocarbon resin, and α-methyl styrene resin, with the amounts of from 10 to 40 % by weight.

The hot melt laminating adhesive can additionally comprise at least one other polymer, especially a polyolefin such as polyethylene or a polyethylene wax.

The amount of preferred ingredients present in the adhesive is tabulated as follows:

|  | | Preferred | Most preferred |
| --- | --- | --- | --- |
| Thermoplastic (co-)polymer | 10 - 100 % | 20 - 80 % | 35 - 60 % |
| Aliphatic hydrocarbon resin | 0 - 50 % | 0 - 45 % | 0 - 40 % |
| Aromatic hydrocarbon resin | 0 - 20 % | 0 - 15 % | 0 - 10 % |
| Colophonium resin | 0 - 40 % | 0 - 35 % | 0 - 30 % |
| Polyethylene or polyethylene wax | 0 - 20 % | 0 - 15 % | 0 - 10% |

as well as, in case, small amounts of customary additives.

The adhesive film is continuous, even at low coating weights and the laminate does not easily exfoliate or delaminate upon sealing. The adhesive peel strength ranges from 0.5N/15 mm to film destruction, depending on the substrates, adhesive formulation used as well as angle and rate of peeling.

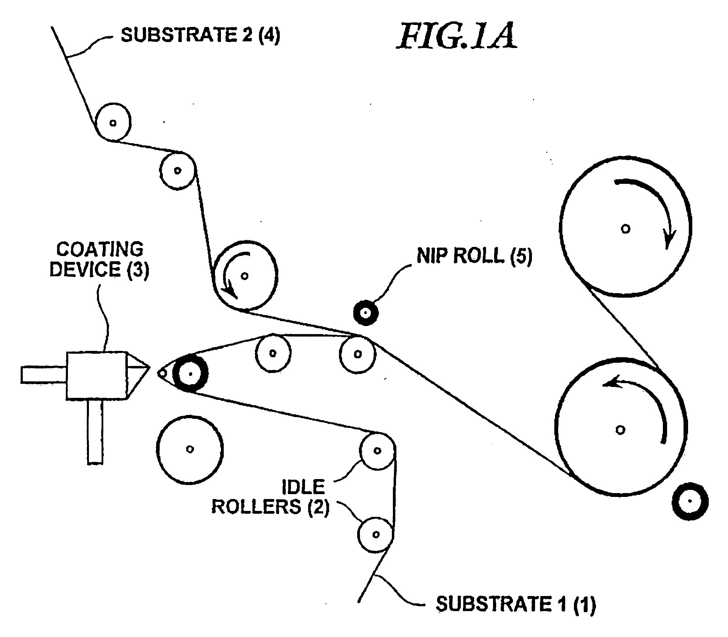

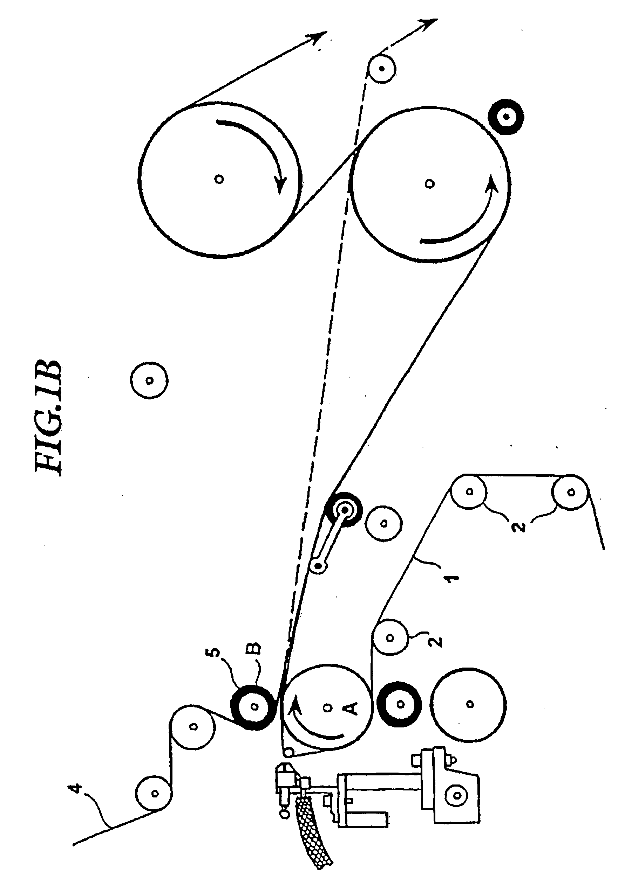

The structure of the machine can be that or similar to that shown in Figures 1A - 1C. Figures 1A and 1B show an embodiment where a thermoplastic composition is released from a coating device (3) onto a first substrate (1), and a second substrate (4) is then disposed upon the free surface of the coated adhesive, by a nip roll (5). It is to be understood that this arrangement can be modified in other embodiments and especially that the second substrate (4) need not be used in all cases. Then, the nip roll (5) can be employed to nip the thermoplastic composition directly to the first substrate. For such embodiments, the nip roll (5) will be release-coated, e.g. may be a steel roller with a polytetrafluorethylene surface layer.

More specifically shown in Fig. 1A and 1B, Substrate 1 (1) travels past a series of idle rollers (2) to ensure the web is in proper alignment prior to approaching the coating device (3). Substrate 2 (4) is optionally adhered to the coating surface by means of a nip roll (5). Substrate 1 is defined as the first substrate that is contacted with the substantially continuous thermoplastic film. Substrate 1 may be any substrate which is generally provided in a roll good such as non-woven, paper including release-coated paper, and a wide variety of films, foils and other materials. The embodiment of Figure 1A, where the nip roll (5) is located fairly remote from the contact point of adhesive film and first substrate, is especially suited for the coating of porous substrates. The embodiment of Figure 1B is especially suitable when Substrate 1 is nonporous meaning air does not readily pass through the substrate. In the case of film lamination, Substrate 1 is typically a film. Substrate 2 may also be provided in a roll good and be the same or a different material as Substrate 1.

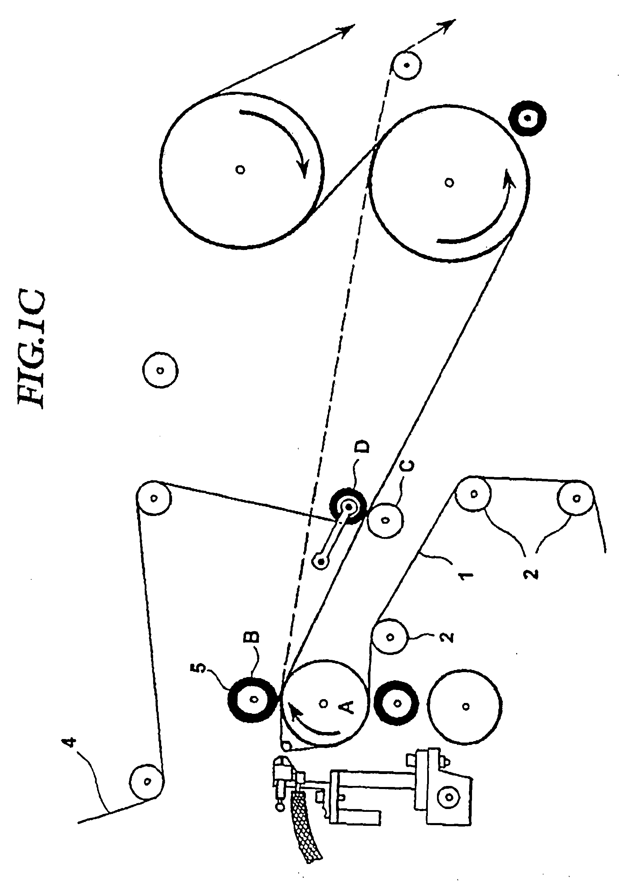

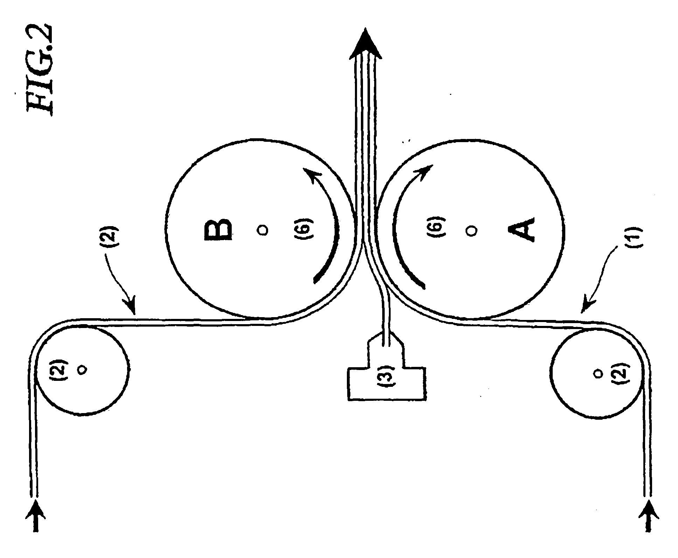

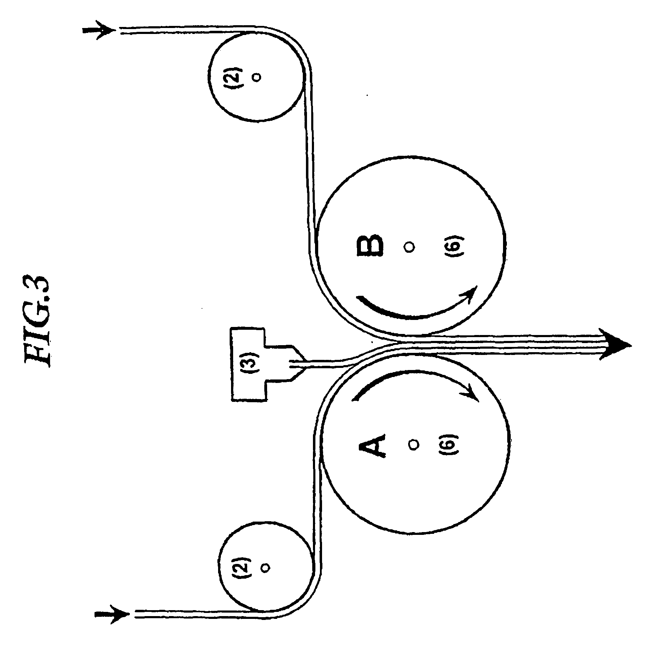

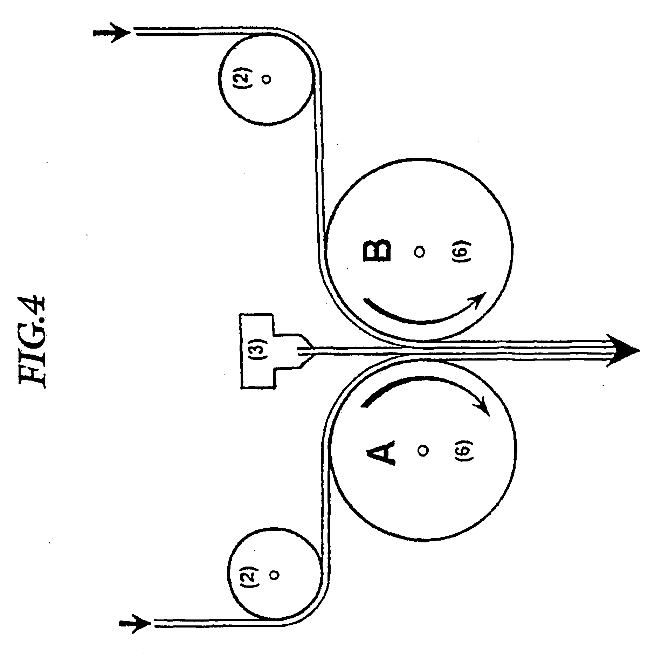

Figure 1C shows an embodiment where the adhesive film is first nipped onto the first substrate (1) by nip roll (5), which is part of a nipping station as later shown by rolls A and B in Figures 2 - 10.

A second substrate 4 is then disposed on the free surface not in contact with the first substrate (1), at a lamination station formed by rolls C and D. With this type of machine, it is possible to nip the adhesive film directly onto the first substrate (1) by means of nip roller (5) or nip a second substrate (4) onto the first substrate and adhesive, again by means of nip roller (5). In the tests, both methods were tried. The dispensing temperature of the hot melt can range from about 90° to about 200°, preferably from about 110° to about 140° C depending on the composition, thickness and speed of coating.

Machine speeds of up to 500m/minute, preferably 350 m/minute, and more preferably 300 m/minute are suitable. During the coating process, the adhesive film is release from the coating slot nozzle, at various distances from a first substrate (1) to be coated with the adhesive. Also, the distance of the slot nozzle from the substrate can be varied between a few millimetres and up to 500 mm and more, preferably from 10 millimeter to 300 millimeter, and more preferably from 20 millimeter to 100 millimeter, without materially affecting the quality of the coating.

When the adhesive film released from the coating slot nozzle is directly coated onto a first substrate by means of nip roller (5) provided with a release coating, the adhesive shows no tendency to adhere to the nip roller. The nip pressure can also be varied and can be as high as 10 bars, preferably 8 bars, and more preferably 7 bars, when the nip roller presses against the substrate.

It is generally found that as the adhesive coated onto the first substrate leaves the nip station, no air is enclosed between the adhesive and the first substrate.

In another aspect, a second substrate can be laminated onto the adhesive layer by a second set of rollers, located in the flow path of the substrate upstream of the nip roller (5). Also these laminations, usually have no streaking, enclosed air, or other lamination defects.

The coating head can be at 0.5 mm away from the substrate, preferably at 2 mm, more preferably at 10 mm, and most preferably not more than 20 mm.

The temperature at which the adhesive contacts the substrate is preferably not more than 150° C, more preferably not more than 120° C, and most preferably not more than 110° C, as it is desirable to use as substrates polymeric film that are either of low gauge, or film material that has low melting points.

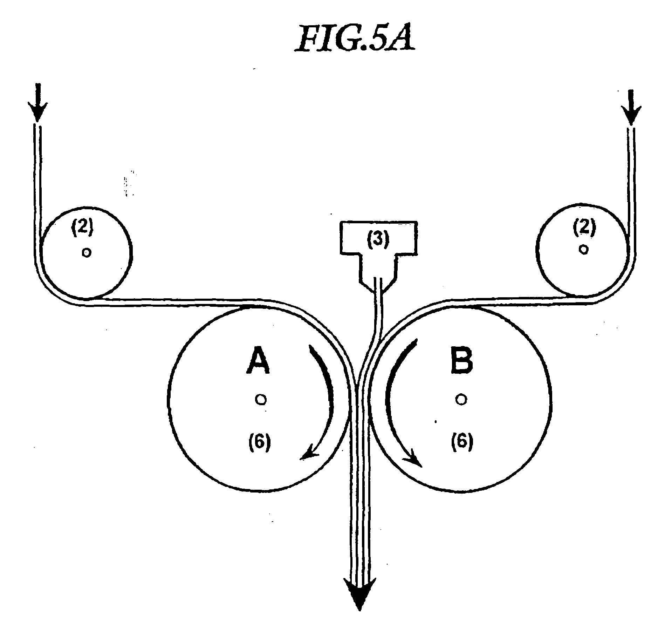

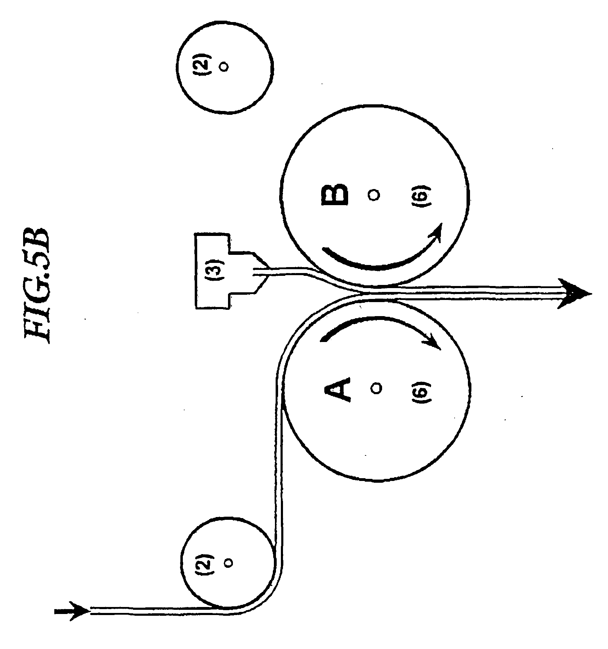

Figures 2 - 10 illustrate various preferred embodiments of the present invention wherein an extruded thermoplastic composition such as a holt melt adhesive is applied to a first substrate and then laminated to a second substrate. In each of these illustrations, Substrate 2 is optional in that the invention may alternatively involve a single continuous nonporous film formed from a non-contact coating method and coated onto a single substrate. In the absence of the second substrate, Figure 5B represents a transfer coat application since the molten composition is first applied to a release coated roller which then contacts a first substrate at the nip. The first substrate may then by laminated to the second substrate in a subsequent step. For many food packaging laminates, the film-to-film method shown in Figures 2 - 5A is presently the most preferred lamination method.

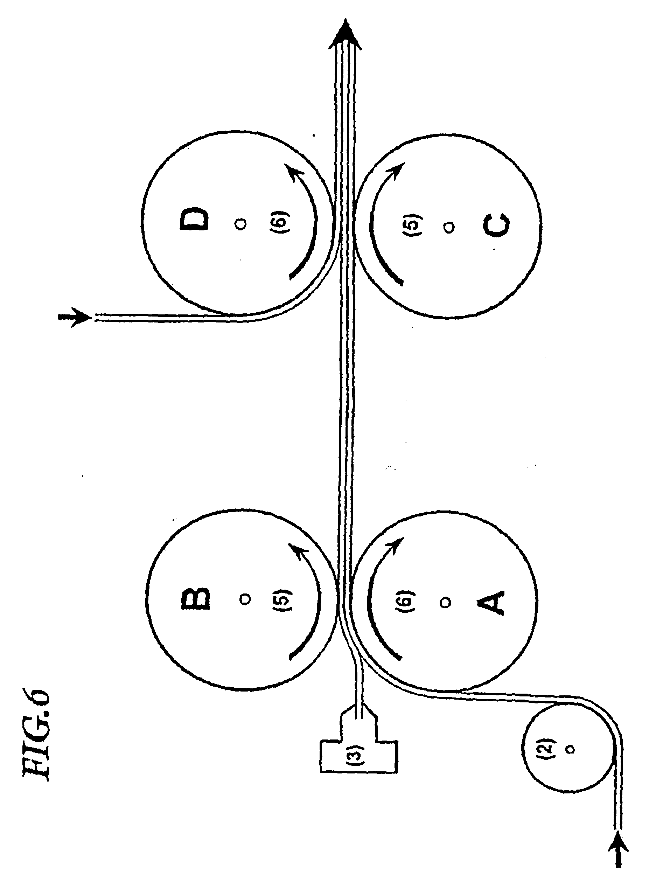

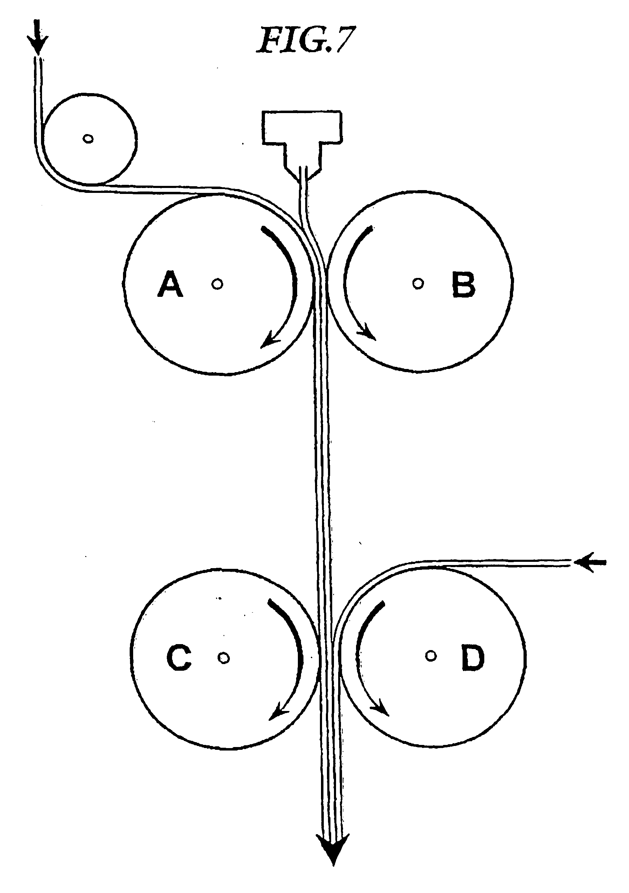

In embodiments where the thermoplastic coating or hot melt adhesive is contacted to a first substrate in the absence of a second substrate, as illustrated in Figures 6 and 7 it is important to have a release coating such as silicon, Teflon, or release paper on the roller (s) in contact with the adhesive or porous substrate to prevent adherence of the thermoplastic composition to the roller. The nip roller presses the air out from between the thermoplastic coating film and the substrate to insure there is no air entrapment between the first substrate and the thermoplastic composition. Roller A can be a steel cylinder to encourage heat transfer whereas roller B, typically the nip roller is rubber. In many cases it is however more preferred that roller A is rubber whereas roller B is a steel cylinder with an external release-coating (Figures 5B to 10).

Figures 2 - 10 demonstrate that the nozzle position may be varied from perpendicular positions to parallel positions with respect to the position of the substrate.

Figures 6 - 9 show further embodiments which are specifically suitable for film-to-film laminations for food packaging.

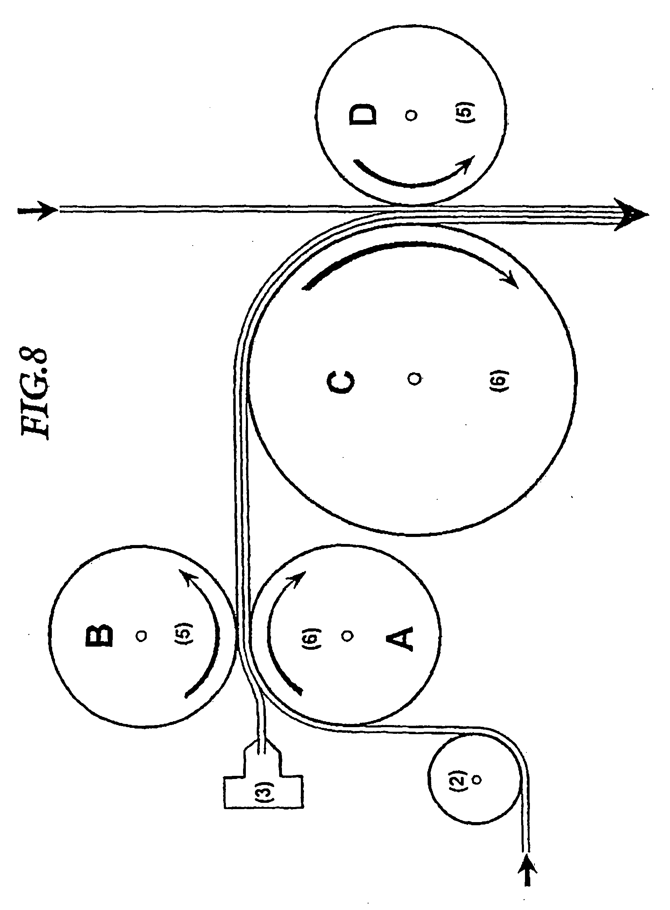

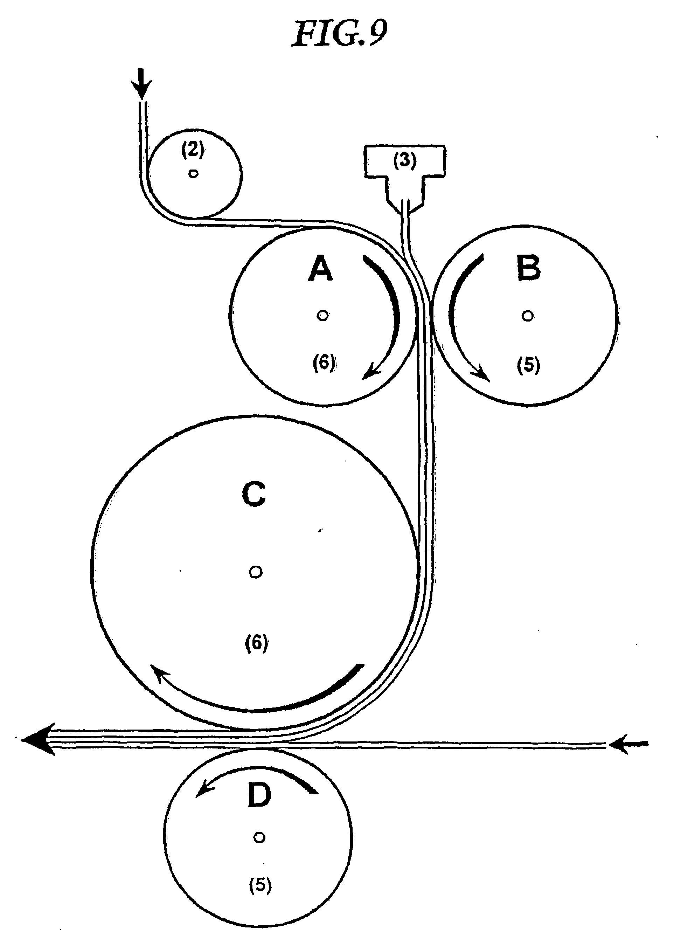

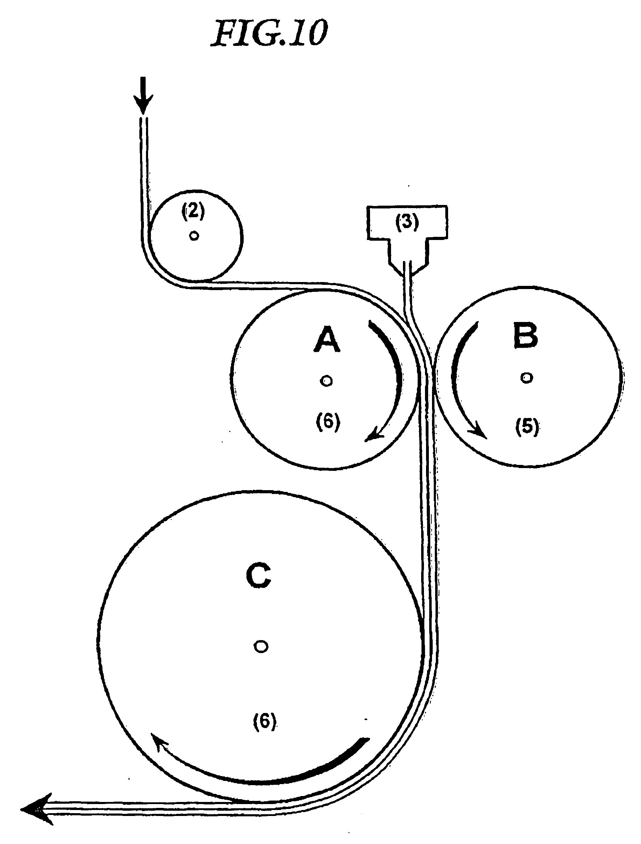

Figures 8 and 9 illustrate a second substrate being laminated to the first substrate at a position farther from the coating device. In this embodiment, it is preferred that roller C be heated to reactivate or extend the open time of the hot melt adhesive or thermoplastic coating prior to being laminated to the second substrate. The temperature of roller C can vary between 30 - 100° C for lamination between rollers C and D. Alternatively, roller C may be a chill roll to hasten the speed of set of the thermoplastic coating or hot melt adhesive. This can be useful where the coating is produced for intermediate storage. The substrate laminated in the nip of rollers C and D can be either in web form, or in the form of sheets (Figures 8 and 9). As shown in Figure 10, where roller C is a chill roll, the inventive method can be used to produce substrates such as films coated on one side with a thermoplastic composition, which can e.g. be used for heat sealing applications. Where this is desired, a further layer of a release paper can of course be added, as shown in Figure 9, to protect the heat-sealing material e.g. for intermediate storage.

The coating device is positioned at a distance of at least 0.5 mm, preferably at least 2 mm, from the substrate (or the release coated roller in the case of transfer coating in the absence of a second substrate - Figure 5B). The maximum distance the coating device may be positioned from the substrate is only limited by practicality, particularly when the coating device is positioned substantially vertically. Preferably, the distance is less than 5 m, preferably less than 3 m, more preferably less than 1 m, even more preferably less than 500 mm, and most preferably from 2 to 20 mm, depending on the properties of the thermoplastic composition being coated. It is typically advantageous that the area between the coating device and substrate be shielded during coating from air-borne contaminants and air currents to prevent distortion of the coating prior to contacting the substrate. This is particularly the case when the distance between the coating device and substrate is greater than 500 mm.

The distance is largely dictated by the viscosity and open time of the thermoplastic composition being coated. In the case of producing film coatings on fibrous substrates in this manner, it is surmised that the thermoplastic composition cools sufficiently in its suspended state such that it has built in viscosity and cohesive strength to the extent that any filaments or fibers present on the substrate surface cannot penetrate the coating, yet the thermoplastic composition is molten enough to adequately adhere to the substrate. The greater the distance between the coating device and the nip roller, the more the hot melt adhesive or coating will cool prior to contacting the first substrate. For some adhesive compositions, this cooling will adversely affect the adhesion (or anchorage) to the substrate. Therefore, the substrate may be passed over a heated roller prior to being nipped, or a heated nip roller may be employed if the distance between the nip roller and the coating device causes the coating or adhesive to cool to the extent that it will no longer adequately adhere or anchor to the substrate. Also, transfer coating as shown in Figure 5B can be employed, where the release-coated nip roller B can be temperature-controlled by a heating cooling system such as passing cooling fluid through roller B.

The diameter of rolls A and B is preferably 15 mm to 50 mm.

Thereafter, the sufficiently cooled coating contacts the substrate surface and adheres to the surface without deeply penetrating into the substrate. If the thermoplastic coating is of such a composition that it substantially detackifies after sufficient cooling, the laminate of the coated substrate, thus formed, can be rolled up and stored.

Alternatively this can be achieved by placing a release coated second substrate, such as a silicone-coated paper, on the surface of the adhesive coating. The laminate can then be used at some later time. The laminate can be bonded by any suitable bonding technique including ultrasonic bonding, heat sealing, or more commonly adhesive bonding.

Preferably, the coating is done "in-line" immediately before any further processing. An example of an in-line process for which the invention is particularly well suited may be found in DE 195 46 272 C1 to Billhöfer Maschinenfabrik GmbH. Suitable slot nozzles, made by INATEC GmbH of Langenfeld, Germany, are shown in US 5,958,178.

Preferably, the laminating material is a synthetic film material, especially a clear and transparent film material as is customarily used for such laminations.

Typically such film materials comprise plane or embossed films, which are at least substantially made from oriented polypropylene, polyethylene, polyesters such as Mylar®, polyacetate, nylon, celluloseacetate, and so forth having a thickness of 5 μm (microns) to 50 μm (microns). These films are commonly laminated or sealed to printed paper or boardstock. Composite materials are commonly produced including film-to-film and film-to-foil and metalized substrates are commonly used for laminates. These types of laminates are commonly found in such industries as graphic arts and packaging. Using the method of the invention, such laminates can be produces using non-reactive hot melt adhesives instead of the commonly used reactive adhesives.

Generally, the exit temperature of the thermoplastic composition will be less than 240° C, and thus much lower than typical polymer extrusion temperatures, which are of the order of 300° C. Although the temperature of the thermoplastic composition as it exits the coating device may range from 80° C and 180° C or more, the non-contact coating system of the present invention allows coating to be accomplished at extremely low temperatures. For this embodiment it is preferred that the thermoplastic composition be coated at a temperature less than 160° C, more preferably less than 140° C, even more preferable less than about 120° C and even more preferable less than 110° C. As mentioned previously, heat sensitive materials can also be coated in this manner by employing higher coating temperatures in combination with increasing the distance between the coating device and the substrate to be coated to allow for sufficient cooling. Materials which are normally too sensitive mechanically and/or thermally (e.g. very low gauge films) for customary coating methods can therefore be coated using the method of the present invention. Such sensitive materials include low gauge polyethylene materials and the like.

A substantial advantage of the present invention is that a substantially continuous coating layers can be made from hot melts at very low coating weights. Even with customary commercially available hot melts, continuous layers can be produced at coating weights ranging from 0.5 g/m$^2$ to as much as 50-60 g/", preferably at coating weights of not more than 20 g/m$^2$, more preferably at coating weights of not more than 10 g/m$^2$, even more preferably between 3 g/m$^2$ and 5 g/m$^2$ and most preferably less than 3 g/m$^2$. However, coating weights higher than 60 g/m$^2$ may be useful for other applications wherein reducing the mechanical and heat-induced stresses is of primary importance.

The very thin coatings which can be produced according to the invention not only contribute to the economical advantages of the inventive method, but also makes it possible to achieve a very much reduced stiffness of the material, which thus comes much closer, in its properties, to uncoated substrates.

The invention also concerns foodstuff items packaged in accordance with the invention. The use of such flexible laminating materials as packaging material for the food, drink and drug industries has the major advantage of avoiding contamination of the packaged items by volatile and/or migratable packaging material components such as monomers. This makes it possible to produce packaging laminate materials for the food industry advantageously from solvent-free hot melt laminate adhesives, without incurring the danger of contaminating the food with monomers and their reacting products. At the same time, optically very advantageous laminates are obtained, which are not inferior, but quite often superior, in these aspects than state-of-the-art laminates.

Specifically, the present invention is related to the use of a flexible laminate material comprising a polymer plastics material film laminated onto a second substrate by means of a hot melt laminating adhesive, as a packaging material to reduce contamination of packaged goods, especially food, by volatile packaging material components, such as monomers or ologomers. Such volatile and/or migratable components can include isocyanates and/or aromatic amines.

These foodstuffs can be selected from all foodstuffs which have been packaged, are currently packaged or may in the future be packaged using laminated packaging material as above disclosed. Specifically, these will be items such as medicine, snack foods and confectionery, aqueous and moist foods, dry foodstuffs, coffee, tea and such goods, heat-treated and steamed, as well as autoclaved goods, but also fresh fruit, fresh vegetables, fresh meats, fish and cheese, as well as corresponding items for deep freezing and other low temperature preservation purposes. Vacuum preservation packaging is included, and the packed food items of the invention further include prepared food for reheating, as well as beverages. Thus, the invention includes the packaging of milk in film bags, as well as fruit and vegetable juices and alcoholic beverages such as wine.

In addition, such laminates can be used as capseals for various food, drink and medicine packaging, as well as aseptic packaging of food and drink items mentioned above. Also, other non-food uses can include packaging of toys for example, for small children and babies, who may put such items in their mouths, are expressly within the scope of the present invention. Also, boxes and pouches for baked goods are contemplated.

The present invention is further illustrated by the following non-limiting examples.

**Examples**

Hot melt adhesives were produced from different thermoplastic polymers, tackifiers and plasticizers as shown in Table 1 below:

Examples 1-10

Table 1

| Ingredients | Ex 1 | Ex 2 | Ex 3 | Ex 4 | Ex 5 | Ex 6 | Ex 7 | Ex 8 | Ex 9 | Ex 10 |
|---|---|---|---|---|---|---|---|---|---|---|
| Lotryl® 17 BA 07 EnBA copolymer | 23 | 40 | 35 | 10 | 23 | - | - | - | - | - |
| Lotryl® 35 BA 40 EnBA copolymer | 15 | - | - | 20 | 15 | 20 | 15 | 15 | - | - |
| Lotryl® 35 BA 320 EnBA copolymer | 17 | - | - | 30 | 17 | 10 | 16 | 15 | 20 | 20 |
| Escorene® UL 150 - 19 EVA copolymer | - | - | - | - | - | 20 | 24 | 23 | 45 | 45 |
| AC-8 Polyethylene wax | 5 | 10 | - | - | 5 | - | 5 | - | 5 | - |
| AC 540 Polyethylene wax | - | - | - | - | - | - | - | - | - | 5 |
| Paraflint® C 80 Polyethylene wax | - | - | - | - | - | 10 | - | - | - | - |
| Mobil Wax 145 paraffin wax | - | - | - | - | - | - | - | 5 | - | - |
| Escorez® 5300 Hydrocarbon resin | 28 | 38 | 38 | 38 | - | 23 | 28 | 30 | 20 | 20 |
| Foral® AX rosin acid resin | 10 | 10 | 25 | - | 28 | 15 | 10 | 10 | - | - |
| Kristalex® F 85 α-methyl styrene resin | - | - | - | - | 10 | - | - | - | - | - |
| Kristalex® F 100 α-methyl styrene resin | - | - | - | - | - | - | - | - | 10 | 10 |

Hot melt adhesives corresponding to the compositions depicted in Examples 1 and 7 were coated onto substrates, using a modified PAK 600 laminating machine by Kroenert, Hamburg, Germany. The structure of this machine is basically similar to that shown in Figures 1A - 1C. With this type of machine, it is possible to nip the adhesive film directly onto the first substrate (1) by means of nip roller (5) or nip a second substrate (4) onto the first substrate and adhesive, again by means of nip roller (5). In the tests, both methods were tried. The dispensing temperature of the hot melt was 140° C for the composition of Example 1, and 110° C for the composition of Example 7. These compositions showed favourable low viscosities of Examples 1 and 7.

Coatings were made on polyester film (Polyester RN 36, produced by Pütz Folien, Taunusstein-Wehen, Germany) and high density polyethylene films (HDPE KC 3664.00, obtained from Mildenberger & Willing, Gronau, Germany).

Coating weights were 5 to 6 $g/m^2$ at machine speeds of approximately 70 m/minute. (In separate tests, coating weights of 2 to 3 $g/m^2$ were obtained.)

The adhesive film was released from the coating slot nozzle, at various distances from the first substrate (1) to be coated with the adhesive, in a variety of tests. In another set of experiments, it was found that the distance of the slot nozzle from the substrate could be varied between a few millimetres and up to 500 mm and more, without materially affecting the quality of the coating.

Where in these experiments, the adhesive film released from the coating slot nozzle was directly coated onto the first substrate by means of nip roller (5) provided with a release coating, it was found that the adhesive did not adhere to the nip roller. The nip pressure was not measured, but the nip roller was pressed against the substrate at a laminating pressure of 7 to 8 bar.

It was found that the adhesive coated onto the first substrate left the nip station with no air enclosed between the adhesive and the first substrate.

In other tests, a second substrate was laminated onto the adhesive layer by a second set of rollers, located in the flow path of the substrate upstream of the nip roller (5). Also these laminations, using the same films were examined for streaking, enclosed air, or other lamination defects.

The laminations thus made were all free of flaws. No streaking, enclosed air or any other defects were observed.

In a similar fashion, laminations were made using the same type of films, but the other adhesives depicted in Examples 2 to 10 of Table 1. The results were as good as those obtained with the adhesive compositions of Examples 1 and 7.

In further tests, typical food packaging items were produces and tested as follows:

Embodiment A

Laminates were produced on a modified Billhöfer "Coat 2000" laminating machine as mentioned above and equipped with an INATEC slot nozzle, using 20 $\mu$m OPP-Films, available under the trade name "Propafilm RGP" from UCB Films.
For the laminating trials, one of the films was counter-printed and the other one was metalized, i.e. the printed surface of the one film was laminated to the metalized surface of the other film. The hot melt composition used corresponds to Example 7 in Table 1. In one trial the coating weight of the hot melt was 5 g/m$^2$, in a second trial 8 g/m$^2$ and in yet another example 14 g/m$^2$ was used.
The laminates thus made were then subjected to heat-seal tests as conventional in the packaging industry.
In all cases the laminates produced were of good quality and showed no delaminating tendencies in heat-seal trials.

Embodiment B

Laminates were produced on a machine as in Embodiment A, using two 20 $\mu$m OPP-Films, available under the trade name "Propafilm RGP" from UCB Films.
For the laminating trials, one of the films was counter-printed and the other one was metalized, i.e., the printed surface was laminated to the metalized surface. (Different printing inks were used, which were also different from Embodiment A).
The hot melt composition used corresponds to Example 9 in Table 1. In one trial the coating weight of the hot melt was 5 g/m$^2$, in a second trial 10 g/m$^2$ was used.
In both cases the laminates produced were of good quality and showed no delaminating tendencies in heat-seal trials (as in Embodiment A).

Embodiment C

Laminates were produced (as above) with two 20 $\mu$m OPP-Films, available under the trade name "Trespaphan GND 20" from Trespaphan.
For the laminating trials one of the films was counter-printed and the other one was unprinted, i.e. the printed surface of the first film was laminated to the unprinted surface of the second film. (The printing colours were different from Embodiments A and B).
The hot melt composition used corresponds to Example 7 in Table 1. In one trial the coating weight of the hot melt was 2 g/m$^2$, in a second trial 5 g/m$^2$ and in yet another example 10 g/m$^2$-was used.
In all cases the laminates produced were of good quality and showed no delaminating tendencies in heat-seal trials (as above-described).

Embodiment D

Laminates were produced (as above) using 40 $\mu$m PE-film available from Huhtamaki and 400 $\mu$m PVC from MKF. Both films were unprinted. Such laminates are commonly used to produce (through heat-moulding) beakers, bowls or dishes which can be closed by heat-seal lidding. It has become rather common to use APET (atactic polyester films) instead of PVC for food packaging.
The laminates were formed both in-line, i.e. laminating the PE-film, after applying the hot melt to it, in-line onto the PVC-film. In another trial the hot melt coated PE-film was wound onto a roll and later (thus off-line), the coated PE-film was heat sealed onto the PVC-film.
The hot melt composition used for these trials corresponds to Example 10 in Table 1. The coating weight used was 10 g/m$^2$.
In both cases, i.e. with laminates produced in-line and off-line the laminates had excellent clarity and lamination strength and did not show any signs of delamination upon heat - moulding the laminates and heat-lidding the moulded dishes.

Embodiment E

Laminates were produced with conventional "direct coating" (i.e. contact between slot nozzle and substrate) methods with 36 $\mu$m PETP-films, available as Mylar RN 36 from DuPont Teijin Films and 40 $\mu$m PE-films from Transpac.

Both films were unprinted. The hot melt composition used corresponds to Example 7 in Table 1. In one trial the coating weight of the hot melt was 5 g/m$^2$, in a second trial 11 g/m$^2$ and in yet another example 20 g/m$^2$ was used.

All laminates showed high lamination strength very good clarity and no signs of delamination in heat sealing trials (as above-described).

The laminates made by such direct coating methods were however found to be streaky, i.e. the adhesive did not form a closed, perfect layer between the two films at coating weights below 20 g/m$^2$.

Laminates as described in Embodiments A - C and E proved very suitable for typical "form-fill-and-seal" applications. In these, the laminates are supplied to a food packaging device (such as a bagging machine) and are initially bonded to form a tube-like structure, by a longitudinal sealing step. The food item to be packaged is then placed into a suitable section of the film tube and the packaging is then completed by forming transverse seals across the tube on either side of the food items, which separate the food items from each other and at which the packaged item can then be cut off from the rest of the tube.

**Claims**

1. An article comprising a packaged food, drink, medicine or baby toy, comprising:

    a package comprising a flexible food packaging laminate comprising a first substrate having a pre-formed non-reactive hot melt laminating adhesive on at least one surface, said adhesive comprising thermoplastic polymer selected from the group consisting of copolymers of olefins and (meth-) acrylic acid, copolymers of olefins and (meth-)acrylic acid derivatives, copolymers of olefin and (meth-)acrylic acid esters, copolymers of olefins and vinylic compounds, poly-$\alpha$-olefins, polyesters, polyamides, thermoplastic synthetic rubber, metallocene-catalysed polymers, ionomers and mixtures of two or more of these thermoplastic polymers; and tackifying resin and being free from migratable contaminants, a second substrate laminated onto said adhesive bearing surface of said first substrate, said laminate being free from aromatic amines, monomeric isocyanates, oligomeric isocyanates, volatile organic contaminants, and migratable organic contaminants;
    and a food, drink, medicine or baby toy.

2. The article of claim 1, wherein said first substrate is a polymeric film material comprising a thermoplastic polymer, preferably selected from the group consisting of a poly-$\alpha$-olefin, a polyester, and mixtures thereof.

3. The article of claim 2, wherein said film material is printable, heat-sealable and can, in case, be metalized.

4. The article of claim 2, wherein said film material is partly transparent.

5. The article of any preceding claims, wherein at least one of said substrates is selected from the group consisting of a film, a metal foil, a metal layer, paper, cardboard and combinations thereof.

6. The article of any preceding claims, wherein said laminate is in a form selected from the group consisting of a bag, pouch and a box.

7. The article of claim 6, wherein said laminate is sealable, especially heat-sealable.

8. The article of any preceding claims, wherein said laminating adhesive is applied as a substantially closed film to the first substrate, from an applicator means spaced from the substrate so that the applicator means is substantially not in contact with the substrate.

9. The article of any preceding claims, wherein said hot melt adhesive is applied to the substrate at an area weight of not more than 20 g/m$^2$, preferably not more than 10 g/m$^2$, more preferably not more than 5 g/m$^2$, even more preferably not more than 3 g/m$^2$ and most preferably not more than 3 g/m$^2$ and with a minimum area weight of at least 0.5 g/m$^2$.

10. The article of claim 1, wherein said thermoplastic polymer is selected from the group consisting of at least one of ethylene/methacrylate copolymers (EMAs), ethylene vinylacetate and ethylene/N-butyl acrylate-copolymers (EnBAs).

11. The article of any preceding claim, wherein the hot melt adhesive additionally comprises at least one component selected from the group consisting of plasticizers, waxes, oil, stabilizers and antioxidants.

**12.** The article of any preceding claims, wherein the hot melt laminating adhesive additionally comprises at least one polymer selected from the group consisting of polyethylene, polyethylene wax and mixtures thereof.

**13.** The article of claim 12, wherein the thermoplastic polymer component comprises at least two different EnBA components, wherein one EnBA component has a melt flow index which is at least four times and up to 10 times higher than the melt flow index of at least one other EnBA component, said melt flow index being in units of gram per 10 minutes.

**14.** The use of a flexible laminate material according to claim 1 comprising a polymeric film material laminated onto a substrate by means of a hot melt laminating adhesive as a packaging material to reduce contamination of packaged foods drinks, medicine or baby toys by a contaminant selected from the group consisting of isocyanates, aromatic amines and mixtures thereof.

**15.** The use of claim 14, wherein said packaged foods are selected from the group consisting of medicine, toys, snack foods, confectionery, aqueous and moist foods, dry foodstuffs, milk, coffee, tea, cheese, fresh fruits, fresh vegetables, fresh meats, fish, and corresponding frozen items.

**16.** A method of making the article of claim 1, said method comprising:

1) forming a laminate for food packaging, said forming comprising:

a) positioning a slot nozzle at least 0.5 mm spaced away from a first substrate and advancing said first substrate along a path;
b) applying a non-reactive hot melt adhesive to a surface of said first substrate from said slot nozzle, said non-reactive hot melt adhesive comprising thermoplastic polymer selected from the group consisting of copolymers of olefins and (meth-) acrylic acid, copolymers of olefins and (meth-)acrylic acid derivatives, copolymers of olefin and (meth-)acrylic acid esters, copolymers of olefins and vinylic compounds, poly-$\alpha$-olefins, polyesters, polyamides, thermoplastic synthetic rubber, metallocene-catalysed polymers, ionomers and mixtures of two or more of these thermoplastic polymers; and tackifying resin and being free from migratable contaminants, and
c) mating a second substrate with the adhesive bearing surface of said first substrate to form a laminate; or

1) forming a laminate for food packaging, said forming comprising

a) positioning a slot nozzle at least 0.5 mm spaced away from a transfer device;
b) applying a non-reactive hot melt adhesive to a surface of said transfer device from said slot nozzle, said non-reactive hot melt adhesive comprising thermoplastic polymer and tackifying resin and being free from migratable contaminants;
c) transferring said adhesive from said transfer device to a surface of a first substrate, and
d) mating a second substrate with the adhesive bearing surface of said first substrate to form a laminate,

said food packaging laminate being free from aromatic amines, monomeric isocyanates, oligomeric isocyanates, volatile organic contaminants, and migratable organic contaminants, and
2) packaging a food, drink, medicine, or baby toy with said food packaging laminate.

**17.** The method of claim 16 further comprising:

feeding said laminate to a food packaging device;
forming said laminate into a tube-like structure; and
placing said food in a said tube-like structure.

**18.** The use of a flexible laminate, comprising a first substrate having a pre-formed non-reactive hot melt laminating adhesive on at least one surface, said adhesive comprising thermoplastic polymer selected from the group consisting of copolymers of olefins and (meth-) acrylic acid, copolymers of olefins and (meth-)acrylic acid derivatives, copolymers of olefin and (meth-)acrylic acid esters, copolymers of olefins and vinylic compounds, poly-$\alpha$-olefins, polyesters, polyamides, thermoplastic synthetic rubber, metallocene-catalysed polymers, ionomers and mixtures of two or more of these thermoplastic polymers; and tackifying resin and being free from migratable contaminants, a second substrate laminated on said adhesive bearing surface of said first substrate, said laminate being free from aromatic amines, monomeric isocyanates, oligomeric isocyanates, volatile organic contaminants, and migratable organic contaminants for packaging food, drinks, medicine or baby toys.

**Patentansprüche**

1. Gegenstand, umfassend ein verpacktes Lebensmittel, Getränk, Medizin oder Babyspielzeug, umfassend:

   eine Verpackung, umfassend ein flexibles Lebensmittelverpackungslaminat, umfassend ein erstes Substrat mit einem vorgeformten, nicht reaktiven Laminierungsschmelzklebstoff auf mindestens einer Oberfläche, wobei der Klebstoff ein thermoplastisches Polymer, ausgewählt aus der Gruppe, bestehend aus Copolymeren von Olefinen und (Meth-)Acrylsäure, Copolymeren von Olefinen und (Meth-) Acrylsäurederivaten, Copolymeren von Olefinen und (Meth-)Acrylsäureestern, Copolymeren von Olefinen und Vinylverbindungen, Poly-$\alpha$-Olefinen, Polyestern, Polyamiden, synthetischen, thermoplastischen Kautschuken, Metallocen katalysierten Polymeren, Monomeren und Gemischen von zwei oder mehreren von diesen thermoplastischen Polymeren, und klebrig machendes Harz umfasst, und wobei es frei von migrierbaren Verunreinigungsstoffen ist, wobei ein zweites Substrat auf die mit Klebstoff versehene Oberfläche des ersten Substrats laminiert ist, wobei das Laminat frei von aromatischen Aminen, monomeren Isocyanaten, oligomeren Isocyanaten, volatilen organischen Verunreinigungsstoffen und migrierbaren organischen Verunreinigungsstoffen ist;
   und ein Lebensmittel, Getränk, Medizin oder Babyspielzeug.

2. Gegenstand gemäß Anspruch 1, wobei das erste Substrat ein polymeres Filmmaterial ist, umfassend ein thermoplastisches Polymer, vorzugsweise ausgewählt aus der Gruppe, bestehend aus einem Poly-alpha-Olefin, einem Polyester und Gemischen davon.

3. Gegenstand gemäß Anspruch 2, wobei das Filmmaterial bedruckbar, mit Wärme versiegelbar ist und gegebenenfalls mit Metall beschichtet werden kann.

4. Gegenstand gemäß Anspruch 2, wobei das Filmmaterial teilweise transparent ist.

5. Gegenstand gemäß einem der vorstehenden Ansprüche, wobei mindestens eines der Substrate aus der Gruppe ausgewählt ist, bestehend aus einem Film, einer Metallfolie, einer Metallschicht, Papier, Pappe und Kombinationen davon.

6. Gegenstand gemäß einem der vorstehenden Ansprüche, wobei das Laminat eine Form aufweist, ausgewählt aus der Gruppe, bestehend aus einer Tasche, einem Beutel und einem Behälter.

7. Gegenstand gemäß Anspruch 6, wobei das Laminat versiegelbar ist, insbesondere mit Wärme versiegelbar.

8. Gegenstand gemäß einem der vorstehend Ansprüche, wobei der Laminierungsklebstoff als ein im wesentlichen geschlossener Film auf das erste Substrat aufgebracht wird, aus einem Aufbringungsmittel, dass von dem Substrat beabstandet ist, so dass das Aufbringungsmittel im wesentlichen nicht mit dem Substrat in Kontakt ist.

9. Gegenstand gemäß einem der vorstehend Ansprüche, wobei der Schmelzklebstoff auf das Substrat mit einem Flächengewicht von nicht mehr als 20 g/m$^2$ aufgebracht wird, vorzugsweise nicht mehr als 10 g/m$^2$, stärker bevorzugt nicht mehr als 5 g/m$^2$, noch stärker bevorzugt nicht mehr als 3 g/m$^2$ und am stärksten bevorzugt nicht mehr als 3 g/m$^2$ und mit einem minimalen Flächengewicht von mindestens etwa 0,5 g/m$^2$.

10. Gegenstand gemäß Anspruch 1, wobei das thermoplastische Polymer ausgewählt ist aus der Gruppe, bestehend aus mindestens einem aus Ethylen/Methacrylatcopolymeren (EMA), Ethylenvinylacetat und Ethylen/N-Butylacrylatcopolymeren (EnBA).

11. Gegenstand gemäß einem der vorstehenden Ansprüche, wobei der Schmelzklebstoff zusätzlich mindestens eine Komponente umfasst, ausgewählt aus der Gruppe, bestehend aus Weichmachern, Wachsen, Ölen, Stabilisatoren und Antioxidantien.

12. Gegenstand gemäß einem der vorstehend Ansprüche, wobei der Laminierungsschmelzklebstoff zusätzlich mindestens ein Polymer umfasst, ausgewählt aus der Gruppe, bestehend aus Polyethylen, Polyethylenwachs und Gemischen davon.

13. Gegenstand gemäß Anspruch 12, wobei die thermoplastische Polymerkomponente mindestens zwei verschiedene EnBA-Komponenten umfasst, wobei eine EnBA-Komponente einen Schmelzflussindex aufweist, welcher mindestens viermal bis zu zehnmal höher ist als der Schmelzflussindex der mindestens einen anderen EnBA-Komponente, wobei der Schmelzflussindex in Einheiten von g/10 min angegeben wird.

14. Verwendung eines flexiblen Laminatmaterials gemäß Anspruch 1, umfassend ein polymeres Filmmaterial, welches auf ein Substrat mit Hilfe eines Laminierungsschmelzklebstoffs laminiert ist, als ein Verpackungsmaterial, um die Kontamination von verpackten Lebensmitteln, Getränken, Medizin, oder Babyspielzeug durch einen Verunreinigungsstoff, ausgewählt aus der Gruppe, bestehend aus Isocyanaten, aromatischen Aminen und Gemischen davon, zu vermindern.

15. Verwendung gemäß Anspruch 14, wobei die verpackten Lebensmittel ausgewählt sind aus der Gruppe, bestehend aus Medizin, Spielzeug, Knabber-Lebensmittel, Konfekt, wässrigen und feuchten Lebensmitteln, trockenen Lebensmitteln, Milch, Kaffe, Tee, Käse, frischen Lebensmitteln, frischem Gemüse, frischem Fleisch, Fisch und entsprechenden gefrorenen Einheiten.

16. Verfahren zum Herstellen eines Gegenstands, gemäß Anspruch 1, wobei das Verfahren umfasst:

(1) Bilden eines Laminats zum Verpacken von Lebensmitteln, wobei das Bilden umfasst:

(a) Positionieren einer Schlitzdüse mindestens 0,5 mm beabstandet von einem ersten Substrat und Bewegen des ersten Substrats entlang eines Pfades;
(b) Aufbringen eines nicht-reaktiven Schmelzklebstoffs auf eine Oberfläche des ersten Substrats aus der Schlitzdüse, wobei der nichtreaktive Schmelzklebstoff ein thermoplastisches Polymer, ausgewählt aus der Gruppe, bestehend aus Copolymeren von Olefinen und (Meth-) Acrylaten, Copolymeren von Olefinen und (Meth-)Acrylsäurederivaten, Copolymeren von Olefinen und (Meth-)Acrylsäureestern, Copolymeren von Olefinen und Vinylverbindungen, Poly-$\alpha$-Olefinen, Polyestern, Polyamiden, thermoplastischen synthetischen Kautschuken, Metallocen katalysierten Polymeren, Ionomeren und Gemischen von zwei oder mehreren dieser thermoplastischen Polymere, und klebrig machendes Harz, und wobei es frei von migrierbaren Verunreinigungsstoffen ist, und
(c) Zusammenbringen eines zweiten Substrats mit der mit Klebstoff versehenen Oberfläche des ersten Substrats, um ein Laminat zu bilden; oder

Bilden eines Laminats zum Verpacken von Lebensmitteln, wobei das Bilden umfasst,

(a) Positionieren einer Schlitzdüse, mindestens 0,5 mm beabstandet von einer Übertragungsvorrichtung;
(b) Aufbringen eines nicht reaktiven Schmelzklebers auf eine Oberfläche der Übertragungsvorrichtung aus der Schlitzdüse, wobei der nicht reaktive Schmelzklebstoff thermoplastisches Polymer und klebrig machendes Harz umfasst, und es frei von migrierbaren Verunreinigungsstoffen ist;
(c) Übertragen des Klebstoffs von der Übertragungsvorrichtung auf eine Oberfläche eines ersten Substrats, und
(d) Zusammenbringen eines zweiten Substrats mit der mit Klebstoff versehenen Oberfläche des ersten Substrats, um ein Laminat zu bilden,

wobei das Laminat zum Verpacken von Lebensmitteln frei ist von aromatischen Aminen, monomeren Isocyanaten, oligomeren Isocyanaten, volatilen organischen Verunreinigungsstoffen, und migrierbaren organischen Verunreinigungsstoffen und
(2) Verpacken eines Lebensmittels, Getränks, Medizin, oder Babyspielzeugs mit dem Laminat zum Verpacken von Lebensmitteln.

17. Verfahren gemäß Anspruch 16, weiterhin umfassend:

Beschicken des Laminats in eine Vorrichtung zum Verpacken von Lebensmitteln,
Formen des Laminats in eine röhrenartige Struktur; und
Platzieren des Lebensmittels in der röhrenartigen Struktur.

18. Verwendung eines flexiblen Laminats, umfassend ein erstes Substrat mit einem vorgeformten nicht-reaktiven Laminierungsschmelzklebstoff auf mindestens einer Oberfläche, wobei der Klebstoff ein thermoplastisches Polymer, ausgewählt aus der Gruppe, bestehend aus Copolymeren von Olefinen und (Meth-)Acrylsäure, Copolymeren von Olefinen und (Meth-)Acrylsäurederivaten, Copolymeren von Olefinen und (Meth-)Acrylsäureestern, Copolymeren von Olefinen und Vinylverbindungen, Poly-α-Olefinen, Polyestern, Polyamiden, thermoplastischen synthetischen Kautschuken, Metallocen katalysierten Polymeren, Ionomeren und Gemischen von zwei oder mehreren dieser thermoplastischen Polymere, und ein klebrig machendes Harz umfasst, und es frei von migrierbaren Verunreinigungsstoffen ist, ein zweites Substrat, welches auf die mit Klebstoff versehene Oberfläche des ersten Substrats laminiert ist, wobei das Laminat frei von aromatischen Aminen, monomeren Isocyanaten, oligomeren Isocyanaten, volatilen organischen Verunreinigungsstoffen und migrierbaren organischen Verunreinigungsstoffen ist, zum Verpacken von Lebensmitteln, Getränken, Medizin oder Babyspielzeug.

**Revendications**

1. Article comportant un aliment, une boisson, un médicament ou un jouet pour bébé sous emballage, comportant :

   un emballage comportant une pellicule d'emballage alimentaire souple comportant un premier substrat ayant un adhésif de pelliculage thermofusible, non réactif, préformé sur au moins une surface, ledit adhésif comportant un polymère thermoplastique choisi parmi le groupe constitué de copolymères d'oléfines et d'acide (méth-)acrylique, de copolymères d'oléfines et de dérivés d'acide (méth-)acrylique, de copolymères d'oléfines et d'esters d'acide (méth-)acrylique, de copolymères d'oléfines et de composés vinyliques, de poly-α-oléfines, de polyesters, de polyamides, de caoutchouc synthétique thermoplastique, de polymères catalysés par métallocène, d'ionomères et de mélanges constitués de deux ou plus de deux de ces polymères thermoplastiques, et une résine collante et exempte de contaminants pouvant migrer, un second substrat pelliculé sur ladite surface porteuse d'adhésif dudit premier substrat, ladite pellicule étant exempte d'amines aromatiques, d'isocyanates monomériques, d'isocyanates oligomériques, de contaminants organiques volatils et de contaminants organiques pouvant migrer,
   et un aliment, une boisson, un médicament ou un jouet pour bébé.

2. Article selon la revendication 1, dans lequel ledit premier substrat est un matériau de film polymérique comportant un polymère thermoplastique, de préférence choisi parmi le groupe constitué d'une poly-α-oléfine, d'un polyester et de mélanges de ceux-ci.

3. Article selon la revendication 2, dans lequel ledit matériau de film peut être imprimé, thermosoudé et peut, au cas où, être métallisé.

4. Article selon la revendication 2, dans lequel ledit matériau de film est partiellement transparent.

5. Article selon l'une quelconque des revendications précédentes, dans lequel au moins un desdits substrats est choisi parmi le groupe constitué d'un film, d'une feuille de métal, d'une couche de métal, de papier, de carton et de combinaisons de ceux-ci.

6. Article selon l'une quelconque des revendications précédentes, dans lequel ladite pellicule se présente sous une forme choisie parmi le groupe constitué d'un sac, d'une poche et d'une boîte.

7. Article selon la revendication 6, dans lequel ladite pellicule peut être soudée, en particulier soudée à la chaleur.

8. Article selon l'une quelconque des revendications précédentes, dans lequel ledit adhésif de pelliculage est appliqué comme un film sensiblement fermé sur le premier substrat, à partir de moyens applicateurs espacés du substrat de telle sorte que les moyens applicateurs ne sont pratiquement pas en contact avec le substrat.

9. Article selon l'une quelconque des revendications précédentes, dans lequel ledit adhésif thermofusible est appliqué sur le substrat à un poids surfacique non supérieur à 20 g/m$^2$, de préférence non supérieur à 10 g/m$^2$, de manière plus préférée non supérieur à 5 g/m$^2$, de manière encore plus préférée non supérieur à 3 g/m$^2$ et de manière la plus préférée non supérieur à 3 g/m$^2$ et avec un poids surfacique minimal d'au moins 0,5 g/m$^2$.

10. Article selon la revendication 1, dans lequel ledit polymère thermoplastique est choisi parmi le groupe constitué d'au moins un élément parmi des copolymères d'éthylène/méthacrylate (EMA), des copolymères d'éthylène acétate de vinyle et d'éthylène/acrylate de N-butyle (EnBA).

11. Article selon l'une quelconque des revendications précédentes, dans lequel l'adhésif thermofusible comporte de plus au moins un composant choisi parmi le groupe constitué d'agents plastifiants, de cires, d'huiles, de stabilisants et d'antioxydants.

12. Article selon l'une quelconque des revendications précédentes, dans lequel l'adhésif de pelliculage thermofusible comporte de plus au moins un polymère choisi parmi le groupe constitué de polyéthylène, de cire de polyéthylène et de mélanges de ceux-ci.

13. Article selon la revendication 12, dans lequel le composant polymère thermoplastique comporte au moins deux composants EnBA différents, dans lequel un composant EnBA a un indice de fluidité qui est au moins quatre fois et jusqu'à 10 fois supérieur à l'indice de fluidité d'au moins un autre composant EnBA, ledit indice de fluidité étant en unités de gramme pour 10 minutes.

14. Utilisation d'un matériau de pellicule souple selon la revendication 1 comportant un matériau de film polymérique pelliculé sur un substrat au moyen d'un adhésif de pelliculage thermofusible faisant office de matériau d'emballage afin de réduire la contamination d'aliments, de boissons, de médicaments ou de jouets pour bébés sous emballage par un contaminant choisi parmi le groupe constitué d'isocyanates, d'amines aromatiques et de mélanges de ceux-ci.

15. Utilisation selon la revendication 14, dans laquelle lesdits aliments sous emballage sont choisis parmi le groupe constitué de médicaments, de jouets, d'aliments à grignoter, de confiseries, d'aliments aqueux et humides, de denrées alimentaires sèches, de lait, de café, de thé, de fromage, de fruits frais, de légumes frais, de viandes fraîches, de poisson et d'articles congelés correspondants.

16. Procédé de fabrication de l'article selon la revendication 1, ledit procédé comportant les étapes consistant à :

1) former une pellicule pour un emballage alimentaire, ladite formation comportant les étapes de :

a) positionner une buse à fente espacée d'au moins 0,5 mm par rapport à un premier substrat et faire avancer ledit premier substrat le long d'un trajet,
b) appliquer un adhésif thermofusible non réactif sur une surface dudit premier substrat depuis ladite buse à fente, ledit adhésif thermofusible non réactif comportant un polymère thermoplastique choisi parmi le groupe constitué de copolymères d'oléfines et d'acide (méth-)acrylique, de copolymères d'oléfines et de dérivés d'acide (méth-)acrylique, de copolymères d'oléfines et d'esters d'acide (méth-)acrylique, de copolymères d'oléfines et de composés vinyliques, de poly-$\alpha$-oléfines, de polyesters, de polyamides, de caoutchouc synthétique thermoplastique, de polymères catalysés par métallocène, d'ionomères et de mélanges constitués de deux ou plus de deux de ces polymères thermoplastiques, et une résine collante et étant exempt de contaminants pouvant migrer, et
c) apparier un second substrat avec la surface porteuse d'adhésif dudit premier substrat afin de former une pellicule, ou

1) former une pellicule pour un emballage alimentaire, ladite formation comportant les étapes de :

a) positionner une buse à fente espacée d'au moins 0,5 mm par rapport à un dispositif de transfert,
b) appliquer un adhésif thermofusible non réactif sur une surface dudit dispositif de transfert depuis ladite buse à fente, ledit adhésif thermofusible non réactif comportant un polymère thermoplastique et une résine collante et étant exempt de contaminants pouvant migrer,
c) transférer ledit adhésif dudit dispositif de transfert à une surface d'un premier substrat, et
d) apparier un second substrat avec la surface porteuse d'adhésif dudit premier substrat afin de former une pellicule,

ladite pellicule d'emballage alimentaire étant exempte d'amines aromatiques, d'isocyanates monomériques, d'isocyanates oligomériques, de contaminants organiques volatils et de contaminants organiques pouvant migrer, et
2) emballer un aliment, une boisson, un médicament ou un jouet pour bébé à l'aide de ladite pellicule d'emballage alimentaire.

**17.** Procédé selon la revendication 16 comportant en outre les étapes consistant à :

- acheminer ladite pellicule jusqu'à un dispositif d'emballage alimentaire,
- former ladite pellicule dans une structure analogue à un tube, et
- placer ledit aliment dans une dite structure analogue à un tube.

**18.** Utilisation d'une pellicule souple, comportant un premier substrat ayant un adhésif de pelliculage thermofusible, non réactif, préformé sur au moins une surface, ledit adhésif comportant un polymère thermoplastique choisi parmi le groupe constitué de copolymères d'oléfines et d'acide (méth-)acrylique, de copolymères d'oléfines et de dérivés d'acide (méth-)acrylique, de copolymères d'oléfines et d'esters d'acide (méth-)acrylique, de copolymères d'oléfines et de composés vinyliques, de poly-$\alpha$-oléfines, de polyesters, de polyamides, de caoutchouc synthétique thermoplastique, de polymères catalysés par métallocène, d'ionomères et de mélanges constitués de deux ou plus de deux de ces polymères thermoplastiques, et une résine collante et étant exempt de contaminants pouvant migrer, un second substrat pelliculé sur ladite surface porteuse d'adhésif dudit premier substrat, ladite pellicule étant exempte d'amines aromatiques, d'isocyanates monomériques, d'isocyanates oligomériques, de contaminants organiques volatils et de contaminants organiques pouvant migrer pour emballer des aliments, des boissons, des médicaments ou des jouets pour bébés.

FIG.1A

SUBSTRATE 2 (4)

COATING DEVICE (3)

NIP ROLL (5)

IDLE ROLLERS (2)

SUBSTRATE 1 (1)

EP 1 377 448 B1

*FIG.1B*

EP 1 377 448 B1

FIG.1C

EP 1 377 448 B1

FIG.2

EP 1 377 448 B1

# FIG.3

# FIG.4

EP 1 377 448 B1

FIG.5A

FIG.5B

FIG.6

# FIG.7

FIG.8

# FIG.9

# FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5494960 A
- US 5532058 A
- US 5861410 A
- US 5907012 A
- US 5834554 A
- EP 0611146 A
- EP 0508489 A
- EP 9801588 W
- US 5958178 A
- US 9409666 W

- US 4798081 A, Hazlitt
- US 5089321 A, Chum
- US 3645992 A, Elston
- US 4937299 A, Ewen
- US 5218071 A, Tsutsui
- US 5272236 A
- US 5272272 A
- EP 416815 A
- DE 19546272 C1

### Non-patent literature cited in the description

- **Wild et al.** Journal of Polymer Science, Poly. Phys. Ed. 1982, vol. 20, 441
- **Randall.** *Rev. Macromol. Chem. Phys.,* vol. 2&3 (C.29), 285-297
- **Zimm, G.H. ; Stockmayer, W.H.** *J. Chem. Phys.,* 1949, vol. 17, 1301

- **Rudin, A.** Modem Methods of Polymer Characterization. John Wiley & Sons, 1991, 103-112
- **Ramamurthy.** *Journal of Rheology,* 1986, vol. 30 (2), 337-357